# EUROPÄISCHE PATENTANMELDUNG

(11) **EP 2 500 719 A1**
(43) Veröffentlichungstag der Anmeldung: **19.09.2012**
(21) Anmeldenummer: 10160088.0
(22) Anmeldetag: 01.10.2008
(51) Int. Cl.: G01N 27/22, G01N 15/06, G01N 27/74

(54) **Rußladungssensor**

(30) Priorität: 01.10.2007 DE 202007013735 U
(62) Teilanmeldung aus: 08804980.4
(71) Anmelder: Hauser, Andreas, 52070 Aachen (DE)
(72) Erfinder: Hauser, Gerald, 38678 Clausthal-Zellerfeld (DE)
(74) Vertreter: Eisenführ, Speiser & Partner

(57) **Zusammenfassung**

Die Erfindung betrifft eine Sensorvorrichtung zur Bestimmung von in einem Gasstrom enthaltenen elektrisch leitenden und/oder elektrisch geladenen Partikeln, insbesondere Rußpartikeln im Abgasstrom eines Dieselmotors, umfassend zumindest zwei in dem Gasstrom anzuordnende Elektroden, Die erfindungsgemäße Sensorvorrichtung ist **dadurch gekennzeichnet, dass** zumindest eine der Elektroden zumindest teilweise als Gitter (202), insbesondere als Flächengitter, ausgebildet ist.

## Beschreibung

Die Erfindung betrifft eine Sensorvorrichtung zur Bestimmung von in einem Gasstrom enthaltenen elektrisch leitenden und/oder elektrisch geladenen Partikeln, insbesondere Rußpartikeln im Abgasstrom eines Dieselmotors, umfassend zumindest zwei in dem Gasstrom anzuordnende Elektroden.

Ein weiterer Aspekt der Erfindung betrifft eine Sensorvorrichtung zur Bestimmung eines Massenstroms eines Mediums, umfassend einen beheizbaren Temperatursensor, vorzugsweise einen Hitzdraht, der so angeordnet ist, dass er in dem Massenstrom platzierbar ist, eine Regel- oder Steuereinheit, welche ausgebildet ist, den beheizbaren Temperatursensor, vorzugsweise den Hitzdraht in einer ersten Messphase auf eine bestimmte Temperatur oberhalb der Temperatur des Massenstroms zu erhitzen und den Massenstrom zu ermitteln, vorzugsweise über Messung einer Spannung, die zur Aufrechterhaltung dieser bestimmten Temperatur des Hitzdrahts erforderlich ist.

Rußladungssensoren sind in verschiedenen konstruktiven Ausgestaltungen bekannt. Eine Methode zur Messung von in einem Gasstrom enthaltenen Partikeln sieht im Stand der Technik üblicherweise vor, dass sich die Partikel zwischen zwei Elektroden ablagern. Ab einer bestimmten Menge abgelagerter Partikel entstehen Widerstandsbrücken zwischen den Elektroden, die eine Widerstandsänderung verursachen. Diese Widerstandsänderung zwischen den Elektroden wird gemessen.

Die DE 195 36 705 A1 zeigt ein Verfahren und eine Vorrichtung zur quantitativen Bestimmung von Rußpartikeln in einem Abgasstrom mit einem Messkondensator aus einer Mantel- und einer Innenelektrode. Zwischen den Elektroden wird ein elektrisches Feld aufgebaut, das, wenn es von einem Gasstrom mit elektrisch leitenden oder geladenen Partikeln durchströmt wird, beeinflusst wird. Die Spannung zwischen den beiden Elektroden wird durch eine geeignete Regelvorrichtung konstant gehalten, so dass ein Ladestrom zwischen den Elektroden und der Spannungsquelle fließen muss. Über diesen Ladestrom wird auf die Menge der im Gasstrom enthaltenen Partikel geschlossen.

Die DE 198 17 402 C1 zeigt eine nach einem ähnlichen Prinzip funktionierende Sensoranordnung, die eine Heizung des Sensors vorsieht, um Partikelablagerungen thermisch zu zerstören.

Die DE 10 2004 039 647 A1 zeigt einen Rußladungssensor mit einem von einem Abgasstrom durchströmten Messkondensator, bei dem das Messsignal durch einen Ladungsverstärker mit Gleichspannungskopplung verarbeitet wird. Weiterhin sieht dieser Rußladungssensor eine dritte Elektrode vor, die als Corona-Elektrode die Partikel auflädt.

Die DE 10 2005 016 395 A1 zeigt einen Rußsensor, der die Partikelladung über einen an seiner Oberfläche nicht isolierten Messwiderstand ermittelt. Die an der Oberfläche des Messwiderstands abgelagerten Partikel bewirken eine Widerstandsänderung entsprechend der Ablagerungsmenge.

Die DE 10 2004 043 121 A1 zeigt ein Sensorelement für Gassensoren zur Bestimmung der Konzentration von Partikeln in Gasgemischen, das mindestens eine erste und eine zweite Messelektrode aufweist, an die eine Spannung anlegbar ist. Die erste Messelektrode ist von einem porösen, für die zu bestimmenden Partikel diffusionsoffenen Material zumindest teilweise bedeckt. DE 103 19 664 A1 offenbart einen Sensor zur Detektion von Teilchen in einem Gasstrom, mit zwei Messelektroden, die auf einem Substrat aus einem isolierenden Werkstoff angeordnet und von einer Schutzschicht überzogen sind. Die Messgenauigkeit dieser Sensoren ist jedoch für eine Reihe von Anwendungen nicht ausreichend und somit weiter zu verbessern.

DE 27 18 474 C3 und DE 31 03 051 A1 zeigen thermische bzw. elektrokalorische Durchflussmesser mit einer von einer Spannungsquelle gespeisten Kaltleiterheizsonde und mit einer Einrichtung zur Messung und Kompensation der Fluidtemperatur. In der DE 27 18 474 C3 wird ein Quotient gebildet aus einem dem Strom im Kaltleiter proportionalen Signal und aus einem Signal, das proportional ist der Differenz aus der Fluidtemperatur und aus einer festen über der Bezugstemperatur der Kaltleiterheizsonde liegenden Temperatur. Auch in der DE 31 03 051 A1 werden zwei Werte an die Eingänge eines Dividierers zugeführt: Erstens ein Signal, das der Differenz zwischen Strom der Kaltleiterheizsonde und Strom eines zusätzlichen Kaltleiters entspricht, der aus der gleichen Spannungsquelle gespeist wird wie die Kaltleiterheizsonde, und der in einem nicht strömenden Bereich des Fluides angeordnet ist, und zweitens ein dem zusätzlichen Kaltleiter entsprechendes Signal. Insbesondere in Anwendungen mit großen Temperaturschwankungen ist die Messgenauigkeit dieser Sensoren jedoch nicht ausreichend und somit weiter zu verbessern.

Die DE 10 2005 057 687 A1 zeigt ein thermisches Massedurchflussmessgerät mit Diagnosefunktion, bei dem zwei Temperatursensoren alternierend als passiver, nicht beheizter Temperatursensor und als aktiver, beheizter Temperatursensor ansteuerbar sind. Weiterhin ist eine Regel-/Auswerteeinheit vorgesehen, die eine Meldung ausgibt und/oder eine Korrektur des ermittelten Massedurchflusses vornimmt, wenn die während des ersten und zweiten Messintervalls bereitgestellten korrespondierenden Messwerte der beiden Temperatursensoren voneinander abweichen. Dieses Messgerät dient dazu, neben dem eigentlichen Messwert Informationen über eine Fehlfunktion bereitzustellen. Nachteilig daran ist jedoch, dass keine Verbesserung des Messergebnisses erzielt wird, insbesondere bei hohen Temperaturschwankungen. Die Messgenauigkeit der genannten Lösungen ist daher weiter zu verbessern.

Ein weiterer Nachteil bekannter Lösungen ist ein hoher Verschleiß, unter anderem durch Korrosion, insbesondere der Elektroden, und die Beeinträchtigung der Widerstandsmessung durch Aschebestandteile, die sich bei einer Partikelverbrennung auf den Sensoroberflächen dauerhaft ablagern. Darüber hinaus weisen die existierenden Lösungen den Nachteil auf, dass sie die Partikelmenge messen. Zur Angabe der Partikelkonzentration eines Gasstroms wird eine extern ermittelte Gasgeschwindigkeit mit einbezogen.

Es ist daher die Aufgabe der vorliegenden Erfindung, einen oder mehrere der Nachteile zu reduzieren oder zu beseitigen.

Insbesondere ist es eine Aufgabe der vorliegenden Erfindung, den Verschleiß der Sensorvorrichtung, insbesondere der Elektroden, zu vermindern.

Es ist weiterhin Aufgabe der vorliegenden Erfindung, die Messgenauigkeit bzw. Messempfindlichkeit und/oder die Messgeschwindigkeit der Sensorvorrichtung zu verbessern.

Es ist weiterhin Aufgabe der vorliegenden Erfindung, weitere Parameter, die außer der Partikelmenge zur Angabe der Partikelkonzentration notwendig sind, zumindest zum Teil zu ermitteln.

Diese Aufgabe wird erfindungsgemäß durch eine Sensorvorrichtung zur Bestimmung von in einem Gasstrom enthaltenen elektrisch leitenden und/oder elektrisch geladenen Partikeln der eingangs genannten Art gelöst, bei der zumindest eine der Elektroden in dem im Gasstrom anzuordnenden Bereich vollständig in einen nicht-leitenden Werkstoff eingebettet ist.

Dadurch wird die Elektrode bzw. werden die Elektroden vor Verschleiß und Korrosion geschützt. Der nicht-leitende Werkstoff kann beispielsweise eine nicht-leitende Vergussmasse, wie Glas, sein.

Eine vollständige Einbettung kann dadurch erzielt werden, dass die zumindest eine Elektrode beschichtet wird oder unmittelbar von dem nicht-leitenden Werkstoff allseitig umgeben ist. Die vollständige Einbettung kann so ausgebildet sein, dass die zumindest eine Elektrode gegenüber ihrer Umgebung elektrisch isoliert ist. Die zumindest eine Elektrode kann auch in einem Gießprozess in einen aushärtenden, nicht-leitenden Werkstoff eingebettet werden.

Die Einbettung kann ausgebildet sein, so dass die Elektrode nicht mit Ablagerungen in Kontakt kommt oder sonstigen Verschleiß induzierenden Einflüssen ausgesetzt ist, so dass sich die Lebensdauer der zumindest einen Elektrode verlängert und Qualitätseinbußen aufgrund von Verschleiß und Korrosion sowie Ascheablagerung verhindert bzw. abgemildert werden.

Die zumindest eine Elektrode kann dabei beispielsweise als Kammelektrode, bifilare Wicklung, Elektrodengitter oder Brückenwiderstand ausgebildet sein. Des weiteren kann die Elektrode auf einem Träger angeordnet sein, beispielsweise aus Keramik, der zusammen mit der zumindest einen Elektrode in den nicht-leitenden Werkstoff eingebettet ist. Auch eine optional vorgesehen Heizung kann zusammen mit der zumindest einen Elektrode in den nicht-leitenden Werkstoff eingebettet sein.

Eine bevorzugte Fortbildung der Erfindung sieht vor, dass die Sensorvorrichtung eine Messeinheit umfasst, die elektrisch mit den zumindest zwei Elektroden gekoppelt und ausgebildet ist, die Partikel über eine Messung der Veränderung eines kapazitiven Widerstands durch Ablagerung von Partikeln auf der zumindest einen vollständig in einen nicht-leitenden Werkstoff eingebetteten Elektrode mittels Wechselstrom, insbesondere höherfrequentem Wechselstrom, zu bestimmen.

Beim Einsatz von Wechselstrom, insbesondere höherfrequentem Wechselstrom, ist es möglich, zumindest eine vollständig in einen nicht-leitenden Werkstoff eingebettete Elektrode für die Ermittlung der Veränderung eines kapazitiven Widerstands durch Ablagerung von Partikeln auf der isolierten Oberfläche zu verwenden.

Die Frequenz des höherfrequenten Wechselstroms beträgt vorzugsweise mindestens 200 kHz und kann bis auf ca. 30 MHz erhöht werden, um die Messempfindlichkeit weiter zu erhöhen. Zur Messung einer verwertbaren, kapazitiven Widerstandsänderung ist diese höhere Frequenz erforderlich, da die Kapazitätsänderungen sehr klein sind und beispielsweise, je nach Elektrodenfläche, in der Größenordnung von 5 bis 50 pF auftreten können.

In dem Zustand, wenn sich keine Ablagerung von Partikeln auf der isolierten Oberfläche der zumindest einen Elektrode befindet, kann ein bestimmter kapazitiver Widerstand der Messanordnung bestimmt werden. Wenn sich dann Rußpartikel auf der isolierten Oberfläche der zumindest einen Elektrode ablagern, bilden diese eine elektrisch leitende Beschichtung aus, die in Wechselwirkung mit den unterhalb der Isolationsschicht liegenden Elektroden eine zusätzliche Kapazität erzeugt. Durch die Messung dieser Veränderung der Kapazität lässt sich die Menge der Partikel bestimmen. Die Messung der Rußpartikelmenge basiert daher auf der Messung des kapazitiven Widerstands. Eine Messung basierend auf dem Ohm'schen Widerstand entfällt durch die erfindungsgemäße vollständige Isolierung der Elektroden.

Ein weiterer Aspekt der Erfindung betrifft eine Sensorvorrichtung zur Bestimmung von in einem Gasstrom enthaltenen elektrisch leitenden und/oder elektrisch geladenen Partikeln der eingangs genannten Art, die dadurch gekennzeichnet ist, dass zumindest eine der Elektroden spulenförmig ausgebildet ist und die Messeinheit ausgebildet ist, die Partikel über eine Messung der Veränderung eines induktiven Widerstands durch Durchströmen der zumindest einen Elektrode von dem Partikel enthaltenden Gasstrom zu bestimmen.

Die zumindest eine Elektrode kann als zylindrische, freitragende Induktionsspule ausgebildet sein, bei der die im Gasstrom enthaltenen Partikel die Spule bevorzugt axial durchströmen und aufgrund ihrer permeablen Eigenschaften die Induktivität beeinflussen. Die Spule kann beispielsweise eine kreisförmige oder quadratische Querschnittsform aufweisen. Die axiale Durchströmung der Spule ist bevorzugt, da sich der induktive Widerstand äußerst wenig ändert, wenn die Partikel außen an der Spule vorbeiströmen, weil dann nur das Streufeld der Spule beeinflusst wird.

Die Spule ist in einen hochfrequenten Schwingkreis mit einer bestimmten Resonanzfrequenz eingebunden. Wenn Rußpartikel durch die spulenförmige Elektrode hindurchströmen, wird die Induktivität verstimmt, und es stellt sich, in Abhängigkeit von der Rußmenge, eine andere Resonanzfrequenz ein. Die Messung der Rußmenge in g/h kann beispielsweise mittels einer Frequenzzählung ermittelt werden.

Die Spule kann oberflächlich leitend sein oder - beispielsweise zum Korrosionsschutz - in einen nicht-leitenden Werkstoff eingebettet sein. Eine leitende Oberfläche der Spule hat nur dann eine messtechnische Wirkung, wenn die Windungen der Spule derart dicht nebeneinander liegen, dass durch Ablagerung von Partikeln Rußbrücken entstehen können. Bei ausreichendem Abstand der Spulenwindungen von einander, vorzugsweise einem Abstand von etwa 2 mm oder mehr, tritt keine messtechnisch relevante Ablagerung auf, da Partikel durch den Abgasstrom weggeblasen werden.

In einer weiteren bevorzugten Fortbildung ist die zumindest eine vollständig in einen nicht-leitenden Werkstoff eingebettete Elektrode spulenförmig ausgebildet und die Messeinheit ausgebildet, die Partikel über eine Messung der Veränderung eines induktiven Widerstands durch Ablagerung von Partikeln auf der zumindest einen vollständig in einen nicht-leitenden Werkstoff eingebetteten Elektrode zu bestimmen.

In dieser Fortbildungsform ist die Elektrode in Form einer Spule ausgebildet, die in einen hochfrequenten Schwingkreis mit einer bestimmten Resonanzfrequenz eingebunden ist. Wenn sich Rußpartikel auf der isolierten Oberfläche der Elektrode ablagern, wird die Induktivität verstimmt, und es stellt sich, in Abhängigkeit von der Rußablagerung, eine niedrigere Resonanzfrequenz ein. Die Messung der Rußablagerung in g/h kann beispielsweise mittels einer Frequenzzählung ermittelt werden.

Die Erfindung kann dadurch fortgebildet werden, dass die Messeinheit ausgebildet ist, die Veränderung des kapazitiven bzw. induktiven Widerstands über eine Verschaltung in zumindest einer Messbrücke, insbesondere einer Wheatstone'schen Halb- oder Vollbrücke zu messen. Der im Zustand ohne Partikelablagerung gemessene Widerstand kann in einer Brückenschaltung durch einen externen, einstellbaren Widerstand kompensiert werden. Wenn sich Rußpartikel auf der isolierten Oberfläche des Sensors ablagern bzw. durch die spulenförmige Elektrode strömen, verändern diese die Kapazität bzw. Induktivität, so dass dies zu einer unmittelbaren Verstimmung der Messbrücke führt.

Die Erfindung kann weiterhin durch eine Heizregelungseinheit fortgebildet werden, die elektrisch oder thermisch mit den zumindest zwei Elektroden gekoppelt und ausgebildet ist, die Ablagerung von Partikeln durch Aufheizen der Sensorvorrichtung, insbesondere auf eine die Partikel thermisch zerstörende Temperatur, zumindest teilweise zu beseitigen.

Das Aufheizen auf eine die Partikel thermisch zerstörende Temperatur erfolgt vorzugsweise durch eine Konstanttemperaturregelung der Heizung, da der Abgasstrom meistens niedrigere Temperaturen aufweist und die Heizung abkühlt. Mit der Regelung kann die Abbrenntemperatur von vorzugsweise mindestens 650 °C aufrecht erhalten werden. Dies kann je nach Gastemperatur und Gasgeschwindigkeit beispielsweise eine Heizleistung von bis zu 150 Watt erfordern.

Durch das Freibrennen des Sensors kann der Sensor, zumindest nahezu, in seinen Ausgangszustand ohne Ablagerungen zurückversetzt werden. Dies ist insbesondere vorteilhaft, wenn durch eine zunehmende Ablagerung von Partikeln, insbesondere wenn diese einen kritischen Grenzwert überschritten hat, die Funktionsfähigkeit oder das Messergebnis durch die Partikelablagerung beeinträchtigt werden. Indem die Sensorvorrichtung eine Heizregelungseinheit umfasst, kann die Sensorvorrichtung selbsttätig gereinigt werden, ohne dass ein externer Zugriff auf die Sensorvorrichtung nötig ist, was beispielsweise den Ausbau eines Sensors erfordern würde.

Bei der Ausbildung der Elektrode als zylinderförmige, vom Gasstrom durchströmte Spule ist das Freibrennen durch Aufheizen zwar möglich, aber nicht notwendigerweise erforderlich, da die Partikel - wie oben dargestellt - bei ausreichendem Abstand der Spulenwicklungen vom Gasstrom abtransportiert werden und sich keine messtechnisch relevante Ablagerung auf der Spule bildet.

In einer weiteren bevorzugten Fortbildung der Sensorvorrichtung ist die Heizregelungseinheit ausgebildet, das Aufheizen bei Erreichen eines vorgegebenen Wertes der Ablagerungsmenge, der Betriebsdauer oder der gemessenen Partikel zu initiieren.

Diese Fortbildung ist insbesondere vorteilhaft, um das Abbrennen der Partikelablagerungen in Abhängigkeit eines Grenzwerts zu automatisieren. Als Grenzwert kann beispielsweise die Menge der kumulierten Partikelablagerungen herangezogen werden. Alternativ kann auch nach einer bestimmten Laufzeit bzw. Betriebsdauer des Sensors das Aufheizen initiiert werden. Weiterhin kann die über die Laufzeit gemessenen Partikel zur Bestimmung eines Grenzwertes und dessen Erreichung herangezogen werden, beispielsweise über die Integration der gemessenen Partikel über die Laufzeit.

Dieser Grenzwert wird vorzugsweise durch eine Kalibrierung bestimmt. Beispielsweise wird bei einer konstanten Rußemission der Verlauf des kapazitiven Widerstands über die Zeit beobachtet. Zunächst erfolgt die Änderung des Widerstandes nahezu linear. Bei stärkerer Ablagerung wird die Widerstandsänderung geringer und die Steigung der Kurve verläuft flacher. Vorzugsweise wird das Ende des linearen Bereiches als Grenzwert festgelegt.

Die Erfindung kann dadurch fortgebildet werden, dass zumindest eine der mit der Heizregelungseinheit elektrisch oder thermisch gekoppelten Elektroden ausgebildet ist, die Sensorvorrichtung aufzuheizen und/oder die Sensorvorrichtung eine mit der Heizregelungseinheit elektrisch gekoppelte, insbesondere mäanderförmige Widerstandsheizung umfasst, die ausgebildet ist, die Sensorvorrichtung aufzuheizen.

Vorzugsweise wirkt die Heizregelungseinheit mit zumindest einer der Elektroden zusammen, so dass die Elektrode als Heizelement für die Sensorvorrichtung dient. Dazu ist es vorteilhaft, wenn die Elektrode aus Widerstandsmaterial mit einem temperaturabhängigen Widerstandskoeffizienten besteht, um als elektrische Heizung verwendet zu werden und eine temperaturbezogene Regelung zu verwirklichen.

Alternativ oder zusätzlich ist es vorteilhaft, eine separate Widerstandsheizung mit der Heizregelungseinheit zu koppeln. Insbesondere für eine Messung des induktiven Widerstands ist es vorteilhaft, die Widerstandsheizung mäanderförmig auszubilden, da eine mäanderförmige Anordnung der Widerstandsheizung keine Induktivität aufweist, die das Messergebnis des induktiven Widerstands verfälschen könnte, sondern nur eine Kapazität aufweist, welche für die Messung nicht hinderlich ist.

Weiterhin kann die Erfindung dadurch fortgebildet werden, dass die Sensorvorrichtung ausgebildet ist, die Partikel auch über eine Messung der Veränderung eines Ohm'schen Widerstands durch Ablagerung von Partikeln auf zumindest einer nicht vollständig in einen nicht-leitenden Werkstoff eingebetteten Elektrode zu bestimmen.

Diese Fortbildungsform kombiniert die Messung von Partikeln über die Veränderung eines kapazitiven und/oder induktiven Widerstands mit der Messung der Veränderung eines Ohm'schen Widerstands. Die Kombination verschiedener Messtechniken kann zur Erhöhung der Messgenauigkeit und zur Reduzierung der Ausfallwahrscheinlichkeit einer Sensorvorrichtung beitragen. Zur Messung der Veränderung eines Ohm'schen Widerstands ist es bevorzugt, dass sich Partikel auf zumindest einem nicht-isolierten Teil zumindest einer Elektrode ablagern können.

Alternativ kann es auch vorteilhaft sein, getrennte Elektroden für die Messung der Veränderung des kapazitiven und/oder induktiven Widerstands und für die Messung des Ohm'schen Widerstands vorzusehen.

Gemäß eines weiteren Aspekts der Erfindung ist die eingangs erwähnte Sensorvorrichtung **dadurch gekennzeichnet, dass** zumindest eine der Elektroden zumindest teilweise als Gitter, insbesondere als Flächengitter ausgebildet ist.

Es hat sich bei verschiedenen Sensorausführungen überraschend herausgestellt, dass durch den Austausch einer beispielsweise aus Blech ausgeführten Messelektrode durch ein Elektrodengitter die Messempfindlichkeit deutlich erhöht werden kann und die Einstellzeit bzw. die Zeitkonstante deutlich reduziert werden kann. Durch das Gitter lässt sich die Feldstärke erheblich steigern. Das Messsignal kann durch diese Anordnung erheblich verstärkt werden. Damit kann die Messqualität und Messgenauigkeit des Sensors deutlich verbessert werden.

In einer vorteilhaften Fortbildung ist das Gitter aus zumindest einem Draht, insbesondere zumindest einem Wolframdraht, ausgebildet. Das erfindungsgemäße Flächengitter kann beispielsweise ein punktgeschweißtes Gitter aus dünnem Wolframdraht, mit beispielsweise einem Durchmesser von 50µm, sein.

Weiterhin bevorzugt ist es, dass das Gitter als Gewebe oder Geflecht ausgebildet ist. Dazu können mehrere Einzeldrähte oder ein durchgehender Draht so angeordnet sein, dass sich eine Vielzahl von Drähten bzw. Drahtabschnitten, die in verschiedenen Richtungen ausgerichtet sind, innerhalb eines bestimmten Flächenausschnitts befinden.

Weiterhin ist bevorzugt, dass das Gitter in Längs- oder Querrichtung zur Strömungsrichtung des Gasstroms ausgerichtet ist. Die Varianten dieser Fortbildungsform unterscheiden sich darin, wie der Gasstrom und die darin befindlichen Partikel das Gitter durch- bzw. umströmen.

Gemäß eines weiteren Aspekts der Erfindung ist die Sensorvorrichtung zur Bestimmung eines Massenstroms eines Mediums der eingangs genannten Art gekennzeichnet durch eine Messvorrichtung zum Ermitteln der Temperatur des Mediums in einer zweiten Messphase, vorzugsweise über eine Messung des Widerstands eines Hitzdrahts, insbesondere des Hitzdrahts, eine Steuereinheit, die ausgebildet ist, den beheizbaren Temperatursensor, vorzugsweise den Hitzdraht, in der ersten Messphase auf eine Temperatur zu steuern, die von der in der zweiten Messphase bestimmten Temperatur des Mediums abhängig ist, und eine Korrektureinheit, die ausgebildet ist, den in der ersten Messphase ermittelten Massenstrom, vorzugsweise den aus der in der ersten Messphase gemessenen Spannung ermittelten Massenstrom, um einen von der in der zweiten Messphase ermittelten Temperatur, vorzugsweise von der aus dem in der zweiten Messphase gemessenen Widerstand des Hitzdrahts ermittelten Temperatur, abhängigen Wert zu korrigieren.

Zur Ermittlung der Partikelladung eines Gasstroms ist die Messung der Gasgeschwindigkeit erforderlich. Die Erfindung sieht einen temperaturgeführten Massenstromsensor vor. Dazu wird in einer ersten Phase vorzugsweise ein Hitzdraht durch einen Ruhestrom auf eine höhere Temperatur als die des Massenstroms aufgeheizt. Diese höhere Temperatur wird konstant gehalten. In Abhängigkeit von der Gasgeschwindigkeit wird dem Draht Wärme entzogen. Da die Temperatur des Hitzdrahts konstant gehalten wird, steigt der Strom durch den Draht an. Dieser Strom wird beispielsweise in kg_{Gasmasse} /h kalibriert und dient somit als Messgröße für den Massenstrom.

Die Regel- oder Steuereinheit zur Erhitzung des Hitzdrahts in einer ersten Messphase auf eine bestimmte Temperatur oberhalb der Temperatur des Massenstroms und zur Ermittlung des Massenstroms über Messung einer Spannung, die zur Aufrechterhaltung dieser bestimmten Temperatur des Hitzdrahts erforderlich ist, kann mit der Steuereinheit zur Steuerung des Hitzdrahts in der ersten Messphase auf eine Temperatur, die von der in der zweiten Messphase bestimmten Temperatur des Mediums abhängig ist, identisch sein.

Entscheidend für die Messung des Massenstroms ist die konstante Temperaturdifferenz zwischen Medium und Hitzdrahttemperatur. Da die Gastemperatur beispielsweise im Abgasstrom eines Dieselmotors jedoch stark schwanken kann, sieht die Erfindung vor, in einer zweiten Messphase die Temperatur des Mediums zu ermitteln, vorzugsweise über eine Messung des Widerstands eines Hitzdrahts, insbesondere des Hitzdrahts der in der ersten Messphase zur Bestimmung des Massenstroms dient.

Die Messvorrichtung zum Ermitteln der Temperatur des Mediums in der zweiten Messphase kann als beliebiger, für den Anwendungsbereich geeigneter Temperatursensor ausgebildet sein und ist nicht auf die Ermittlung der Temperatur über eine Messung des Widerstands eines Hitzdrahts beschränkt. Die Korrektureinheit kann ausgebildet sein, den aus der in der ersten Messphase gemessenen Spannung ermittelten Massenstrom um einen von der in der zweiten Messphase ermittelten Temperatur abhängigen Wert zu korrigieren.

In Abhängigkeit von dieser Temperatur steuert eine Steuereinheit die Temperatur, auf den der Hitzdraht in der ersten Messphase aufzuheizen ist. Damit erfolgt die Aufheizung des Hitzdrahts in der ersten Messphase zur Ermittlung des Massenstroms auf eine von der in der zweiten Messphase gemessenen Temperatur des Gasstroms abhängigen Temperatur.

Verändert sich die Temperatur, auf die der Hitzdraht in der ersten Messphase aufgeheizt wird, in Abhängigkeit von der sich verändernden Temperatur des Mediums, die in der zweiten Messphase gemessen wird, so verändert sich zwangsläufig auch der Ruhestrom in dem Hitzdraht und damit das Messergebnis für den Massenstrom. Das Messergebnis des Massenstroms muss daher um einen dieser Stromveränderung entsprechenden Korrekturwert kompensiert werden. Diese Korrektur erfolgt durch eine Korrektureinheit, die aus der in der zweiten Messphase ermittelten Temperatur des Gasstroms einen Korrekturwert ermittelt.

Die Erfindung ermöglicht es, das Prinzip der hitzdraht-basierten Massenstromermittlung in einem breiten Temperaturbereich anzuwenden, indem der Hitzdraht auf eine Temperatur aufgeheizt wird, die in Abhängigkeit von der jeweiligen Massenstromtemperatur gesteuert wird, und in dem das Ergebnis um einen der jeweiligen Gasstromtemperatur entsprechenden Wert korrigiert wird.

Die Erfindung bietet den Vorteil, den zur Angabe einer Partikelkonzentration erforderlichen Massenstrom zu ermitteln. Dieser Vorteil wird auch insbesondere in Kombination des Massenstromsensors mit einem Partikelsensor deutlich, da in dieser Kombination keine Messwerte mehr über anderweitige, externe Quellen abgefragt werden müssen.

Die Erfindung bietet den weiteren Vorteil, sehr schnell auf Temperaturänderungen reagieren zu können und somit die Qualität des Messergebnisses weiter zu verbessern.

Die erfindungsgemäße Messung des Massenstroms bei stark schwankenden Temperaturen des Mediums ermöglicht vorteilhafterweise auch eine zur Steuerung von NOₓ- Emission erforderliche kennfeldbezogene Abgasrückführung, wie in der Abgasnorm EURO VI vorgesehen. Die vorliegende Erfindung liefert den momentanen Massenstrom und die Temperatur des Abgases, woraus die für die kennfeldbezogene Abgasrückführung erforderliche Rückführungsquote bestimmt werden kann.

Die Erfindung kann bevorzugt dadurch fortgebildet werden, dass die Steuereinheit ausgebildet ist, die erste Messphase und die zweite Messphase alternierend durchzuführen.

Dabei wird abwechselnd zunächst in der ersten Messphase der Hitzdraht auf eine bestimmte Temperatur oberhalb der Temperatur des Massenstroms aufgeheizt und der Massenstrom über eine Messung der Spannung ermittelt, die zur Aufrechterhaltung dieser bestimmten Temperatur des Hitzdrahts erforderliche ist. Anschließend wird in einer zweiten Phase die Temperatur des Mediums bestimmt, die an eine Steuereinheit weitergegeben wird. Bei der nächsten Durchführung der ersten Messphase steuert die Steuereinheit das Aufheizen des Hitzdrahts auf eine bestimmte Temperatur oberhalb der in der vorangehenden zweiten Messphase ermittelten Temperatur des Mediums. Durch diese alternierende Durchführung der beiden Messphasen wird in der ersten Messphase jeweils die in der zweiten Messphase aktuell gewonnene Temperatur des Massenstroms zugrunde gelegt. Weiterhin wird die Ausgabe des ermittelten Massenstroms in der ersten Messphase durch einen Wert korrigiert, der von der in der zweiten Messphase ermittelten Temperatur des Massenstroms abhängig ist.

Alternativ kann die Sensorvorrichtung dadurch fortgebildet werden, dass die Sensorvorrichtung einen beheizbaren Temperatursensor, insbesondere einen ersten Hitzdraht, für die erste Messphase und einen Temperatursensor, insbesondere einen zweiten Hitzdraht, für die zweite Messphase umfasst und die Steuereinheit ausgebildet ist, die erste Messphase und die zweite Messphase kontinuierlich parallel durchzuführen. Soweit auf Fortbildungen und Vorzüge des ersten bzw. zweiten Hitzdrahts Bezug genommen wird, gelten diese für den beheizbaren Temperatursensor bzw. den Temperatursensor entsprechend.

Indem für die erste Messphase und die zweite Messphase jeweils ein eigener Sensor (für die erste Messphase ein beheizbarer Temperatursensor, vorzugsweise ein erster Hitzdraht, und für die zweite Messphase ein beliebiger, für den Anwendungsbereich geeigneter Temperatursensor, vorzugsweise ein zweiter Hitzdraht) zur Verfügung steht, ist es möglich, die beiden Messphasen kontinuierlich und nebenläufig durchzuführen. Dies ermöglicht auch eine konstante Steuerung der Temperatur der ersten Messphase in Abhängigkeit von der in der zweiten Messphase ermittelten Temperatur. Dies kann die Messgenauigkeit und die Messgeschwindigkeit weiter erhöhen. Die Erfindung kann bevorzugt dadurch fortgebildet werden, dass der Hitzdraht zur Ermittlung der Temperatur mit einem konstanten Strom angesteuert wird. Ferner kann dadurch erreicht werden, dass die Messempfindlichkeit über den gesamten Temperaturbereich im wesentlichen gleich bleibt.

Der erste und der zweite Hitzdraht werden unterschiedlich angesteuert. Während der erste Hitzdraht für die erste Messphase zur Ermittlung des Massenstroms auf eine konstante, oberhalb der Temperatur des Massenstroms liegende, Temperatur gesteuert ist und die zur Aufrechterhaltung dieser bestimmten Temperatur des Hitzdrahts erforderliche Spannung ermittelt wird, erfolgt die Ansteuerung bei dem zweiten Hitzdraht für die zweite Messphase zur Ermittlung der Temperatur des Mediums mit einem konstanten Strom nach dem Prinzip eines Widerstandsthermometers.

Es ist weiter bevorzugt, dass der Hitzdraht zur Ermittlung der Temperatur mit einem so geringen konstanten Strom, insbesondere einem Strom von 5-10 mA, angesteuert wird, dass die Temperatur des Hitzdrahts unter der Temperatur des Massenstroms liegt.

Die Ansteuerung erfolgt bei dem Temperaturhitzdraht mit einem sehr geringen, konstanten Strom, der möglichst keine bzw. nur eine sehr geringe Aufheizwirkung erzeugt. Dies ist erforderlich, damit die Änderung der Temperatur des Hitzdrahts möglichst ausschließlich von der Temperatur des den Hitzdraht umgebenden Mediums abhängt. Beispielsweise liegt der zur Ansteuerung des Temperaturhitzdrahts angelegte Strom bei etwa 5-10 mA, während beispielsweise der Ruhestrom des Massenstromhitzdrahts, je nach Mediumstemperatur, zwischen 600 und 1600 mA schwanken kann.

Die Erfindung wird bevorzugt dadurch fortgebildet, dass die Sensorvorrichtung Mittel umfasst, die ausgebildet sind, die Temperatur des beheizbaren Temperatursensors, vorzugsweise des Hitzdrahts, zur Ermittlung des Massenstroms auf eine vorgegebene, insbesondere konstante, Differenz zu der Temperatur des Mediums zu steuern.

Entscheidend für die Messung des Massenstroms ist eine konstante Temperaturdifferenz zwischen Mediums- und Hitzdrahttemperatur. Erfindungsgemäß wird daher die Temperatur des Hitzdrahts so gesteuert, dass sie mit der Temperatur des Mediums steigt oder fällt, so dass die Temperaturdifferenz zwischen Hitzdraht und Medium immer gleich bleibt. Wenn diese Temperaturdifferenz z.B. 100°C beträgt, bleibt diese konstant, auch wenn die Gastemperatur z.B. von 400°C auf 800°C ansteigt. Die Hitzdrahttemperatur wird demzufolge auf eine Temperatur von 500°C (bei einer Gastemperatur von 400°C) bzw. 900° C (bei einer Gastemperatur von 800°C) gesteuert.

Der temperaturgeführte Ruhestrom des Hitzdrahts wird durch einen Regelkreis bei jeder Mediumstemperatur konstant gehalten, so dass die Wärmeabfuhr durch den Massenstrom, in Abhängigkeit von der Mediumsgeschwindigkeit, bei jedem Temperaturniveau gleich ist.

Weiterhin kann die Erfindung dadurch fortgebildet werden, dass zumindest ein Hitzdraht aus einem Material mit möglichst konstantem Widerstandstemperaturkoeffizienten besteht.

Hitzdrähte bestehen vorzugsweise aus Platin. Wesentlich ist, dass der metallische Werkstoff einen möglichst konstanten Widerstandstemperaturkoeffizienten aufweist. Sollte dies nicht der Fall sein, wie beispielsweise bei Wolfram, muss eine tabellarische Linearisierung des nicht linearen Verhaltens vorgenommen und in die Sensorvorrichtung integriert werden.

Die Erfindung kann dadurch fortgebildet werden, dass zumindest ein Hitzdraht aus einem Material mit möglichst hoher mechanischer Festigkeit besteht.

Eine hohe mechanische Festigkeit erhöht die Langlebigkeit der Sensorvorrichtung. Da der Hitzdraht typischerweise einen sehr geringen Durchmesser hat und gleichzeitig beispielsweise im Abgasrohr eines Dieselmotors den Abgaspulsationen widerstehen muss, ist die mechanische Festigkeit von hoher Bedeutung für das Verhindern eines Versagens des Hitzdrahts beispielsweise durch Reißen oder Brechen. Dies ist insbesondere von Bedeutung, wenn die Sensorvorrichtung beispielsweise in der Abgasanlage von Fahrzeugen zum Einsatz kommt, wo ein Ausbau bzw. eine Reparatur der Sensorvorrichtung mit einem hohen Aufwand verbunden wäre. Beispielsweise besitzt Wolfram eine sehr hohe mechanische Festigkeit, allerdings auch ein nachteilig nichtlineares Widerstandstemperaturverhalten.

Weiter ist es bevorzugt, dass die Sensorvorrichtung Mittel umfasst, die ausgebildet sind, zumindest einen Hitzdraht zumindest kurzzeitig auf eine Temperatur, durch welche am Hitzdraht abgelagerte Partikel thermisch zerstört werden, aufzuheizen.

Wenn ein Hitzdraht eine Temperatur aufweist, die niedriger als die Verbrennungstemperatur der Partikel ist, können sich Partikel am Hitzdraht ablagern. Diese Ablagerung verschlechtert den Wärmeübergang von dem Medium an den Draht. Es ist daher vorteilhaft, den Draht vor einer Messung durch kurzzeitige Stromerhöhung auf eine die Partikel thermisch zerstörende Temperatur aufzuheizen, damit eventuelle Ablagerungen verbrennen, um den Hitzdraht zu reinigen.

Ein weiterer Aspekt der Erfindung betrifft eine Schaltung zur Steuerung einer Sensorvorrichtung zur Bestimmung eines Massenstroms eines Mediums, wobei eine erste Schaltkreisanordnung einen veränderlichen Widerstand umfasst und am Temperaturmesspunkt eine der Temperaturänderung des veränderlichen Widerstands entsprechende Spannungsänderung anliegt, die über einen Leitungszweig an eine zweite Schaltkreisordnung und eine dritte Schaltkreisanordnung geführt wird; die zweite Schaltkreisanordnung einen weiteren veränderlichen Widerstand umfasst, der auf eine von der vom Zuleitungszweig aus der ersten Schaltkreisanordnung erhaltenen Spannungsänderung abhängige Temperatur gesteuert wird, sowie die dritte Schaltkreisanordnung einen Messwiderstand umfasst und die an dem Messwiderstand anliegende Spannung bzw. die Spannungsänderung verstärkt wird, um die der Temperaturänderung des veränderlichen Widerstands entsprechende Spannungsänderung aus der ersten Schaltkreisanordnung korrigiert und an einem Messpunkt ausgegeben wird.

Diese Schaltung kann bevorzugt fortgebildet werden, indem eine erste Schaltkreisanordnung einen veränderlichen Widerstand, der an Masse liegt und über die Widerstände mit einer positiven Spannungsquelle verbunden ist und einen Operationsverstärker, der mit seinem nicht invertierenden Eingang die Spannung zwischen dem veränderlichen Widerstand und dem Widerstand abgreift und mit seinem invertierenden Eingang mit dem Widerstand verbunden ist, umfasst und der Operationsverstärker am Temperaturmesspunkt eine der Temperaturänderung des veränderlichen Widerstands entsprechende Spannungsänderung ausgibt, die über einen Leitungszweig an eine zweite Schaltkreisordnung und den invertierenden Eingang eines Operationsverstärkers in einer dritten Schaltkreisanordnung geführt wird; die zweite Schaltkreisanordnung einen weiteren veränderlichen Widerstand umfasst, der über einen Widerstand und ein gesteuertes Schaltelement (pnp-Transistor) mit einer positiven Spannungsquelle verbunden ist, und über einen Operationsverstärker und einen Widerstand auf die vom Zuleitungszweig aus der ersten Schaltkreisanordnung erhaltene Temperatur gesteuert wird, wobei der Widerstand zwischen den Zuleitungszweig von der positiven Spannungsquelle über das gesteuerte Schaltelement zum Widerstand und die Verbindung zwischen einen Messwiderstand in der dritten Schaltkreisanordnung mit Masse geschaltet ist, sowie die dritte Schaltkreisanordnung einen Messwiderstand, der an Masse liegt und mit dem veränderlichen Widerstand der zweiten Schaltkreisanordnung verbunden ist, und einen ersten Operationsverstärker, der an seinem nicht invertierenden Eingang die Spannung zwischen dem Messwiderstand und dem veränderlichen Widerstand abgreift und an seinem invertierende Eingang des Operationsverstärkers einen Nullpunkt darstellt, sowie einen zweiten Operationsverstärker umfasst, der die am nicht invertierenden Eingang anliegende verstärkte Spannung des Messwiderstands um die am invertierenden Eingang anliegende Spannungsänderung der Temperaturmessung korrigiert, so dass an einem Messpunkt ein temperaturkorrigierter Massenstrom ausgegeben wird.

Weitere Aspekte der Erfindung betreffen Sensorvorrichtungen nach den Ansprüchen 25 und 26, die Verwendung einer Sensorvorrichtung nach Anspruch 27, Verfahren zur Bestimmung von in einem Gasstrom enthaltenen elektrisch leitenden und/oder elektrisch geladenen Partikeln nach den Ansprüchen 28, 30 und 37, die nach den Ansprüchen 29, 31 bis 36 bzw. 38 bis 40 fortgebildet werden können, ein Verfahren zur Bestimmung eines Massenstroms eines Mediums nach Anspruch 41, das nach den Ansprüchen 42 bis 49 fortgebildet werden kann, sowie ein Verfahren nach Anspruch 50.

Zu den Vorteilen, Ausführungsvarianten und Ausführungsdetails dieser weiteren Aspekte der Erfindung und ihrer Fortbildungen wird auf die zuvor beschriebenen Aspekte derjenigen Produktformen und Fortbildungen verwiesen, die für die entsprechenden weiteren Aspekte der Erfindung relevant sind.

Im Folgenden werden bevorzugte Ausführungsformen der Erfindung beispielhaft anhand der beiliegenden Figuren beschrieben. Es zeigen:
- Figur 1:: einen schematischen Querschnitt einer Ausführungsform eines zwei- ten Aspekts der vorliegenden Erfindung,
- Figur 2:: eine schematische Draufsicht einer weiteren Ausführungsform eines zweiten Aspekts der vorliegenden Erfindung,
- Figur 3:: eine schematische Draufsicht einer weiteren Ausführungsform eines zweiten Aspekts der vorliegenden Erfindung,
- Figur 4:: schematische Draufsicht einer weiteren Ausführungsform eines zwei- ten Aspekts der vorliegenden Erfindung,
- Figur 5:: eine schematische Ansicht einer ersten Ausführungsform eines ersten Aspekts der vorliegenden Erfindung,
- Figur 6:: ein schematisches Funktionsdiagramm einer Ausführungsform eines dritten Aspekts der vorliegenden Erfindung, und
- Figur 7:: eine Schaltung eines dritten Aspekts der vorliegenden Erfindung.

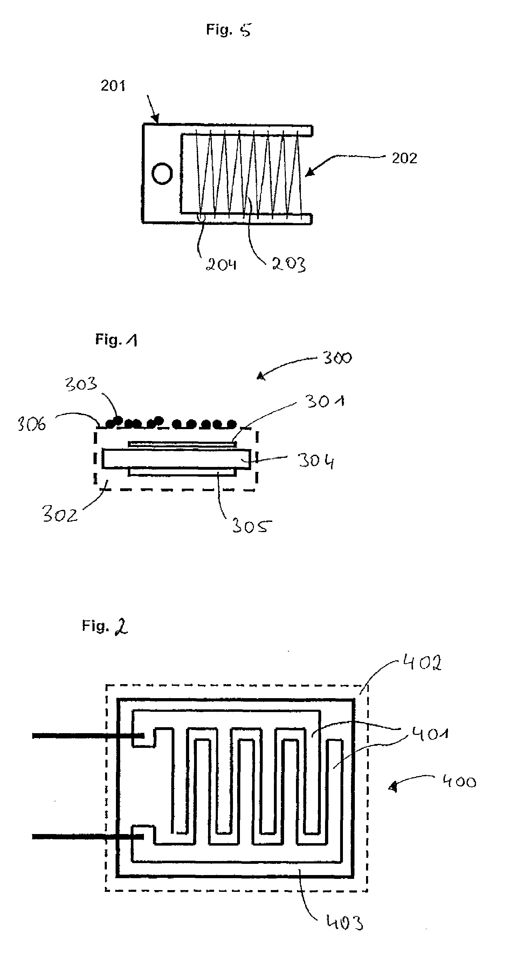

Figur 1 zeigt einen schematischen Querschnitt einer Ausführungsform eines zweiten Aspekts der vorliegenden Erfindung mit Kammelektroden 301, die auf einem Keramikträger 304 gelagert sind. Unterhalb des Keramikträgers 304 ist eine elektrische Heizung 305 angeordnet. Kammelektroden 301, Keramikträger 304 und Heizung 305 sind in eine nicht-leitende Vergussmasse 302, z.B. Glas, eingebettet und vollständig elektrisch isoliert.

Auf der Oberfläche 306 der nicht-leitende Vergussmasse 302 lagern sich im Betrieb des Sensors Partikel 303 ab. Diese bilden eine elektrisch leitende Beschichtung auf der Oberfläche 306 der nicht-leitende Vergussmasse 302 aus und beeinflussen so den kapazitiven Widerstand der Kammelektroden 301.

Durch ein Aufheizen der Anordnung 300 durch die Heizung 305 auf eine die Partikel 303 thermisch zerstörende Temperatur, wird die Anordnung 300 "freigebrannt", d.h. die Anordnung 300 wird durch die Heizung 305 solange aufgeheizt, bis sich zumindest an der Oberfläche 306 der nicht-leitende Vergussmasse 302 eine Temperatur einstellt, bei der die auf der Oberfläche 306 der nicht-leitende Vergussmasse 302 abgelagerten Partikel 303 verbrennen. Diese Temperatur wird so lange beibehalten, bis die Oberfläche 306 der nicht-leitende Vergussmasse 302 abgelagerten Partikel 303 im wesentlichen verbrannt sind und sich im wesentlichen keine abgelagerten Partikel 303 mehr auf der Oberfläche 306 der nicht-leitende Vergussmasse 302 befinden.

Figur 2 zeigt eine schematische Draufsicht einer der Ausführungsform der zweiten Aspekts der vorliegenden Erfindung gemäß Figur 2. Zu erkennen sind die Kammelektroden 401, die auf einem Keramikträger 402 angeordnet sind. Die unter dem Keramikträger 402 angeordnete elektrische Heizung ist in dieser Draufsicht nicht dargestellt. Kammelektroden 401, Keramikträger 402 und die Heizung sind in eine nicht-leitende Vergussmasse 402, z.B. Glas, eingebettet und vollständig elektrisch isoliert

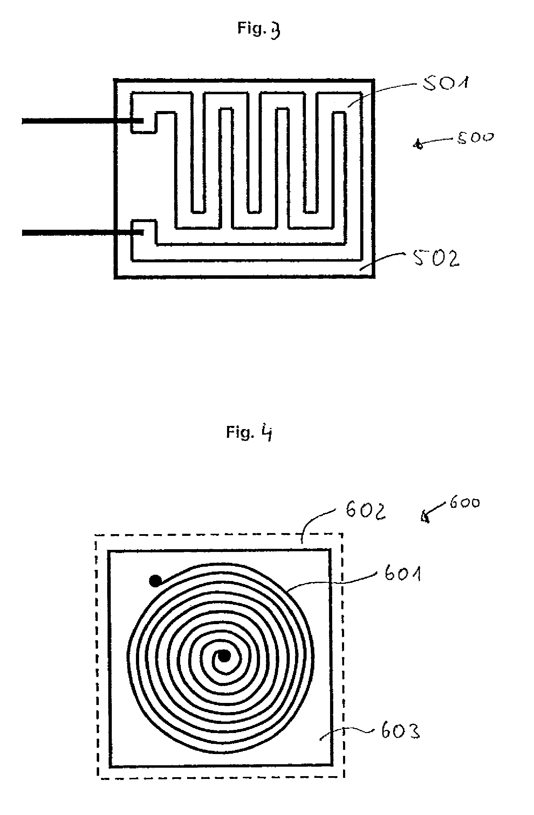

Figur 3 zeigt eine schematische Draufsicht einer weiteren Ausführungsform eines weiteren Aspekts der vorliegenden Erfindung. Dabei ist zu erkennen, dass die Elektrode 501 mäanderförmig ausgebildet und auf einem Keramikträger 502 angeordnet ist. Die Elektrode 501 kann als hochohmiger Dünnschichtwiderstand ausgebildet sein.

Figur 4 zeigt schematische Draufsicht einer weiteren Ausführungsform eines zweiten Aspekts der vorliegenden Erfindung. Hier ist zu erkennen, dass die Elektrode 601 in Form einer Induktionsspule auf einem Keramikträger 603 angeordnet ist. Die Elektrode 601 und der Keramikträger 603 sowie eine optional auf der Unterseite des Keramikträgers angeordnete mäanderförmige Heizung (nicht dargestellt) sind in eine nicht-leitende Vergussmasse 602 eingebettet und vollständig elektrisch isoliert.

Die spulenförmige Anordnung der Elektrode 601 ist in einen Schwingkreis (nicht dargestellt) als Induktivität eingebunden. Durch auf der Oberfläche der nicht-leitende Vergussmasse 602 abgelagerte Partikel (nicht dargestellt), die eine elektrische leitende Schicht ausbilden, wird die Induktivität der Elektrode 601 verstimmt.

Durch "Freibrennen" mittels einer optional auf der Unterseite des Keramikträgers angeordnete mäanderförmige Heizung (nicht dargestellt) oder mittels der Elektrode selbst, die dafür aus Widerstandsmaterial hergestellt sein muss, kann die Anordnung 600 wie analog bei Figur 1 beschrieben von Partikelablagerungen gereinigt werden.

Figur 5 zeigt eine schematische Ansicht einer Ausführungsform eines ersten Aspekts der vorliegenden Erfindung mit einer Elektrodenhalterung 201 und einer als Flächengitter ausgebildeten Elektrode 202. Das Flächengitter ist aus mehreren Einzeldrähten 203 zusammengesetzt, die an mehreren Stellen 204 punktverschweißt sind.

Diese Gitterform der Elektrode ermöglicht eine wesentlich höhere Feldstärke, was zu einer deutlichen Erhöhung des Messempfindlichkeit und einer Verstärkung des Messsignals führt und gleichzeitig die Einstellzeit bzw. Zeitkonstante reduziert.

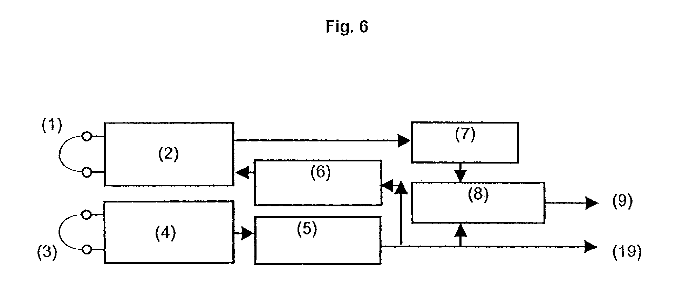

Figur 6 zeigt ein schematisches Funktionsdiagramm einer Ausführungsform eines dritten Aspekts der vorliegenden Erfindung. Ein erster Hitzdraht 1 dient als Massenstromsensor und wird in einer ersten Messphase auf konstante Temperatur geregelt 2. Ein zweiter Hitzdraht 3 dient als Temperatursensor und wird in einer zweiten Messphase auf konstanten Strom geregelt 4. Dadurch wird die Temperatur des durch die Sensorvorrichtung strömenden Mediums in der zweiten Messphase gemessen 5. Parallel dazu wird in der ersten Messphase über den zur Beibehaltung der konstanten Temperatur erforderlichen Strom der Massenstrom ermittelt 7. Erste und zweite Messphase laufen kontinuierlich und parallel.

Damit die Regelung auf konstante Temperatur 2 des Massenstromhitzdrahts 1 den Massenstromhitzdraht auf eine Temperatur erhitzen kann, die eine bestimmte, konstante Differenz zu der aktuellen Mediumstemperatur des Gasstroms aufweist, wird die in der zweiten Messphase über den Temperaturhitzdraht 3 gemessene Temperatur 5 an die Regelung 2 weitergegeben 6. Da die Regelung auf konstante Temperatur 2 damit von der aktuellen Mediumstemperatur abhängig ist, muss auch der ermittelte Massenstrom 7 um einen entsprechenden Temperaturkorrekturwert 8 berichtigt werden, damit am Ausgang Massenstrom 9 der korrekte Massenstrom ausgegeben wird. Am Ausgang Temperatur 19 wird die aktuelle Mediumstemperatur ausgegeben.

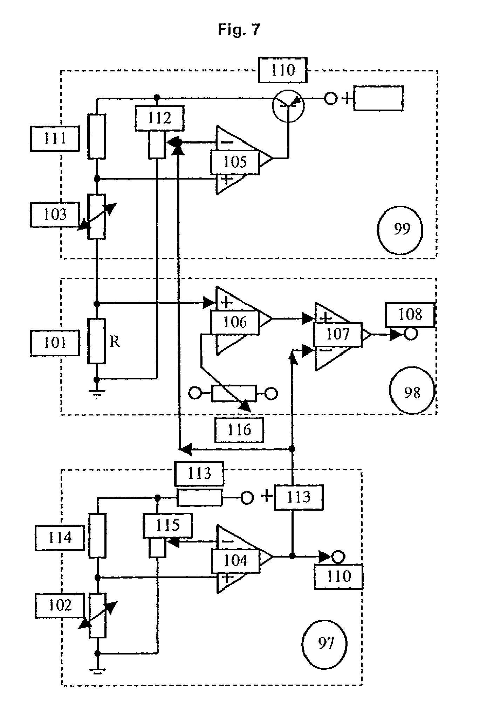

Figur 7 zeigt eine Schaltung eines dritten Aspekts der vorliegenden Erfindung. Eine erste Schaltkreisanordnung 97 umfasst einen veränderlichen Widerstand 102, der an Masse liegt und über die Widerstände 113 bis 115 mit einer positiven Spannungsquelle 113 verbunden ist. Ein Operationsverstärker 104 greift mit seinem nicht invertierenden Eingang die Spannung zwischen dem veränderlichen Widerstand 102 und dem Widerstand 114 ab und ist mit seinem invertierenden Eingang mit dem Widerstand 115 verbunden. Der Operationsverstärker 104 gibt am Temperaturmesspunkt 110 eine der Temperaturänderung des veränderlichen Widerstands 102 entsprechende Spannungsänderung aus, die über einen Leitungszweig an eine zweite Schaltkreisordnung 98 und den invertierenden Eingang eines Operationsverstärkers 107 in einer dritten Schaltkreisanordnung 99 geführt wird.

Die zweite Schaltkreisanordnung 98 umfasst einen weiteren veränderlichen Widerstand 103, der über einen Widerstand 111 und ein gesteuertes Schaltelement 110 (pnp-Transistor) mit einer positiven Spannungsquelle 109 verbunden ist, und über einen Operationsverstärker 105 und einen Widerstand 112 auf die vom Zuleitungszweig aus der ersten Schaltkreisanordnung 97 erhaltene Temperatur gesteuert wird. Der Widerstand 112 ist zwischen den Zuleitungszweig von der positiven Spannungsquelle 109 über das gesteuerte Schaltelement 110 zum Widerstand 111 und die Verbindung zwischen einen Messwiderstand 101 in der dritten Schaltkreisanordnung 99 mit Masse geschaltet.

Die dritte Schaltkreisanordnung 99 umfasst einen Messwiderstand 101, der an Masse liegt und mit dem veränderlichen Widerstand 103 der zweiten Schaltkreisanordnung verbunden ist. Ein erster Operationsverstärker 106 greift an seinem nicht invertierenden Eingang die Spannung zwischen dem Messwiderstand 101 und dem veränderlichen Widerstand 103 ab und stellt an seinem invertierende Eingang des Operationsverstärkers 106 einen Nullpunkt 116 dar. Ein zweiter Operationsverstärker 107 korrigiert die am nicht invertierenden Eingang anliegende verstärkte Spannung des Messwiderstands 101 um die am invertierenden Eingang anliegende Spannungsänderung der Temperaturmessung 110, so dass an einem Messpunkt 108 ein temperaturkorrigierter Massenstrom ausgegeben wird.

## Patentansprüche

1. Sensorvorrichtung zur Bestimmung von in einem Gasstrom enthaltenen elektrisch leitenden und/oder elektrisch geladenen Partikeln, insbesondere Rußpartikeln im Abgasstrom eines Dieselmotors, umfassend zumindest zwei in dem Gasstrom anzuordnende Elektroden,
**dadurch gekennzeichnet, dass** zumindest eine der Elektroden zumindest teilweise als Gitter (202), insbesondere als Flächengitter, ausgebildet ist.

2. Sensorvorrichtung nach dem vorhergehenden Anspruch,
**dadurch gekennzeichnet, dass** das Gitter (202) aus zumindest einem Draht (203), insbesondere zumindest einem Wolframdraht, ausgebildet ist.

3. Sensorvorrichtung nach einem der beiden vorhergehenden Ansprüche,
**dadurch gekennzeichnet, dass** das Gitter (202) als Gewebe oder Geflecht ausgebildet ist.

4. Sensorvorrichtung nach einem der vorhergehenden Ansprüche,
**dadurch gekennzeichnet, dass** das Gitter (202) in Längs- oder Querrichtung zur Strömungsrichtung des Gasstroms ausgerichtet ist.

5. Sensorvorrichtung nach einem der vorhergehenden Ansprüche,
**gekennzeichnet durch** eine Heizregelungseinheit, die elektrisch oder thermisch mit den zumindest zwei Elektroden gekoppelt und ausgebildet ist, die Ablagerung von Partikeln (303) **durch** Aufheizen der Sensorvorrichtung, insbesondere auf eine die Partikel (303) thermisch zerstörende Temperatur, zumindest teilweise zu beseitigen.

6. Sensorvorrichtung nach dem vorhergehenden Anspruch,
**dadurch gekennzeichnet, dass** die Heizregelungseinheit ausgebildet ist, das Aufheizen bei Erreichen eines vorgegebenen Wertes der Ablagerungsmenge, der Betriebsdauer oder der gemessenen Partikel zu initiieren.

7. Sensorvorrichtung nach einem der beiden vorhergehenden Ansprüche,
**dadurch gekennzeichnet, dass** zumindest eine der mit der Heizregelungseinheit elektrisch oder thermisch gekoppelten Elektroden ausgebildet ist, um die Sensorvorrichtung aufzuheizen und/oder die Sensorvorrichtung eine mit der Heizregelungseinheit elektrisch gekoppelte, insbesondere mäanderförmige, Widerstandsheizung (305) umfasst, die ausgebildet ist, die Sensorvorrichtung aufzuheizen.

8. Verfahren zur Bestimmung von in einem Gasstrom enthaltenen elektrisch leitenden und/oder elektrisch geladenen Partikeln, insbesondere Rußpartikeln im Abgasstrom eines Dieselmotors, umfassend die Schritte:
- Bereitstellen von zumindest zwei in dem Gasstrom anzuordnende Elektroden,
- Bereitstellen einer elektrisch mit den zumindest zwei Elektroden gekoppelten Messeinheit,
**gekennzeichnet durch** den Schritt:
- Ausbilden zumindest einer der Elektroden zumindest teilweise als Gitter, insbesondere als Flächengitter.

9. Verfahren nach dem vorhergehenden Anspruch,
**gekennzeichnet durch** den Schritt:
- Ausbilden des Gitters aus zumindest einem feinen Draht, insbesondere zumindest einem Wolframdraht.

10. Verfahren nach einem der beiden vorhergehenden Ansprüche,
**gekennzeichnet durch** den Schritt:
- Ausbilden des Gitters als Gewebe oder Geflecht.

11. Verfahren nach einem der vorhergehenden Ansprüche 8 bis 10,
**gekennzeichnet durch** den Schritt:
- Ausrichten des Gitters in Längs- oder Querrichtung zum Gasstrom.

12. Verfahren nach einem der vorhergehenden Ansprüche 8 bis 11,
**gekennzeichnet durch** den Schritt:
- Bereitstellen einer Heizregelungseinheit, die elektrisch oder thermisch mit den zumindest zwei Elektroden gekoppelt ist,
- Zumindest teilweises Beseitigen der Ablagerung von Partikeln **durch** Aufheizen der Sensorvorrichtung, insbesondere auf eine die Partikel thermisch zerstörende Temperatur.

13. Verfahren nach dem vorhergehenden Anspruch,
**gekennzeichnet durch** den Schritt:
- Aufheizen der Sensorvorrichtung bei Erreichen eines vorgegebenen Wertes der Ablagerungsmenge, der Betriebsdauer oder der gemessenen Partikel.

14. Verfahren nach einem der beiden vorhergehenden Ansprüche,
**gekennzeichnet durch** den Schritt:
- Aufheizen der Sensorvorrichtung mittels zumindest einer der mit der Heizregelungseinheit elektrisch oder thermisch gekoppelten Elektroden und/oder
- Bereitstellen einer mit der Heizregelungseinheit elektrisch gekoppelten, insbesondere mäanderförmigen, Widerstandsheizung und Aufheizen der Sensorvorrichtung mittels der Widerstandsheizung.
